# EUROPEAN PATENT APPLICATION

(11) **EP 1 724 812 A2**
(43) Date of publication of application: **22.11.2006**
(21) Application number: 06252469.9
(22) Date of filing: 10.05.2006
(51) Int. Cl.: H01J 61/30, H01J 9/24, H01J 9/26, H01J 65/04

(54) **Flat fluorescent lamp and backlight unit having the same**

(30) Priority: 11.05.2005 KR 20050039427
(71) Applicant: Samsung Corning Co., Ltd, Suwon-si, Gyeonggi-do 443-732 (KR)
(72) Inventor: Chun, Ho Young 102-103 Hyundai 6-cha Apt. 55,, Seoul 138-802 (KR); Jung, Dai Hong 103-1804, SK Apt. Seonguenae Maeul, Yongin-sin, Geyonggi-do 103-1804 (KR); Jung, Kyeong Taek 511-303, Sangrok Apt.441-885,, Gyeonggi-do 441-885 (KR)
(74) Representative: Pratt, David Martin

(57) **Abstract**

A flat fluorescent lamp includes two panels disposed at an upper position and a lower position respectively; barriers (130) forming discharge spaces which are provided with discharge gas; first bonding parts (140) partially formed on the barriers (130) to bond the barriers partially to the panels; a second bonding part (150) wholly formed between the two panels along peripheries of the two panels to wholly bond the peripheries of the two panels; and electrodes for applying discharge voltage to the discharge gas.

## Description

### Background of the Invention

### 1. Field of the Invention

The present invention relates to a flat fluorescent lamp and a backlight unit, more particularly, to a flat fluorescent lamp in which barriers are bonded partially to a panel and a backlight unit having the same.

### 2. Description of the Background Art

An LCD (liquid crystal display) device displays images utilizing the electric and optical characteristics of LC (liquid crystal). An LCD device has many advantages of small thickness and lightness in comparison with other display devices such as a cathode ray tube (CRT). Thus, an LCD device has been widely used in various products, such as a mobile computer, a communication device, a liquid crystal TV, an airplane, etc.

An LCD device generally includes an LC controlling unit and a backlight unit supplying the liquid crystal with a light. The LC controlling unit includes pixel electrodes disposed on a first panel, a common electrode disposed on a second panel and an LC disposed between the first and second panels. Each of the pixel electrodes is connected to a thin film transistor to receive a pixel voltage, and an equal level of reference voltage is applied to the common electrode. The pixel electrodes and the common electrode are made of a transparent and conductive material.

The light emitted from the backlight unit passes sequentially through the pixel electrode, the LC and the common electrode. The quality of image displayed on an LCD device may be largely influenced by the luminance characteristics of the backlight unit. Typically, high luminance and luminance uniformity improve the image quality of an LCD device.

The conventional backlight unit generally has used a cold cathode fluorescent lamp (CCFL) or a light emitting diode (LED). The CCFL shows high luminance and long lifetime and generates a small amount of heat compared to an incandescent lamp. The LED has high power consumption but high luminance. However, the CCFL or the LED has poor luminance uniformity. Therefore, the conventional backlight unit has to be provided with additional optical members such as a light guide panel, a diffusion sheet and a prism sheet to improve its luminance uniformity. The addition of the optical members inevitably leads to the increase of the size and weight of the backlight unit.

To solve the above mentioned problem, a flat fluorescent lamp was developed. A flat fluorescent lamp can be divided into a lamp with barriers provided independently from a panel and a lamp with barriers integrally formed on a panel.

The former type lamp includes two panels facing each other at an upper position and a lower position respectively, barriers forming discharge spaces which are provided with discharge gas, and electrodes for applying discharge voltage to the discharge gas.

The latter type lamp has the upper panel on which barriers are integrally formed.

A demand for a flat fluorescent lamp increases fast in recent years by virtue of advantages that it is thin and light. However, as the demand increases, the market becomes more competitive. Accordingly, manufacturers have been concentrating their researching capacity on reducing manufacturing cost, simplifying manufacturing process, and improving luminance and luminance uniformity.

### Summary of the Invention

Therefore, an object of the present invention is to reduce manufacturing cost and simplify manufacturing process in manufacturing the flat fluorescent lamp and at the same time to enable the flat fluorescent lamp to emit light of high luminance uniformity on the lamp surface.

In addition, another object of the present invention is to provide a backlight unit having the flat fluorescent lamp.

To achieve the above-mentioned object, the present invention provides a flat fluorescent lamp including: two panels disposed at an upper position and a lower position respectively; barriers forming discharge spaces which are provided with discharge gas; first bonding parts partially formed on the barriers to bond the barriers partially to the panel; a second bonding part wholly formed between the two panels along peripheries of the two panels to wholly bond the peripheries of the two panels; and electrodes for applying discharge voltage to the discharge gas.

Preferably, the first bonding parts are formed on both ends of the barriers.

Preferably, the first bonding parts have length of 3 - 5cm.

Preferably, the first bonding parts and the second bonding part are made of glass or ceramic.

According to one embodiment of the present invention, the second bonding part includes a sealing member and bonding layers, the sealing member is disposed between the two panels along the whole peripheries of the two panels, and the bonding layers are formed between the panels and the sealing member to wholly bond the sealing member to the panels.

According to another embodiment of the present invention, the barriers are integrally formed on at least one panel of the two panels.

Preferably, the flat fluorescent lamp further includes a reflective layer formed on an exposed area of an upper surface of the panel disposed at the lower position which is exposed to the discharge spaces; a first fluorescent layer formed on the reflective layer; a second fluorescent layer formed an exposed area of a lower surface of the panel disposed at the upper position which is exposed to the discharge spaces.

In addition, the present invention provides a backlight unit including: a flat fluorescent lamp including two panels disposed at an upper position and a lower position respectively, barriers forming discharge spaces which are provided with discharge gas, first bonding parts partially formed on the barriers to bond the barriers partially to the panel, a second bonding part wholly formed between the two panels along peripheries of the two panels to wholly bond the peripheries of the two panels, and electrodes for applying discharge voltage to the discharge gas; an upper case and a lower case receiving the flat fluorescent lamp; an optical sheet disposed between the upper case and the flat fluorescent lamp; and an inverter applying the discharge voltage to the electrodes for driving the flat fluorescent lamp.

### Brief Description of the Drawings

The above objects and other advantages of the present invention will become more apparent by describing in detail preferred embodiments thereof with reference to the accompanying drawings, in which:
Figs. 1 to 4 illustrate flat fluorescent lamps according to comparative examples to explain advantages of flat fluorescent lamps of figs. 5 to 10 according to preferable embodiments of the present invention;
Fig. 5 is a perspective view illustrating a flat fluorescent lamp according to a first embodiment of the present invention;
Fig. 6 is a plan view illustrating arrangement of bonding parts in the flat fluorescent lamp of fig. 5;
Fig. 7 is a cross-sectional view taken along a line VII-VII of Fig. 5;
Fig. 8 is a cross-sectional view taken along a line VIII-VIII of Fig. 5;
Fig. 9 is a perspective view illustrating a flat fluorescent lamp according to a second embodiment of the present invention;
Fig. 10 is a cross-sectional view taken along a line X-X of Fig. 9;
Fig. 11 an exploded perspective view illustrating a backlight unit according to a third embodiment of the present invention;
Fig. 12 is a picture showing a result of a lighting test for the flat fluorescent lamp of fig. 4; and
Fig. 13 is a picture showing a result of a lighting test for the flat fluorescent lamp of fig. 9.

### Detailed Description of the Preferred Embodiments

### 1^{st} and 2^{nd} comparative examples

To reduce manufacturing cost and simplify manufacturing process and at the same time to increase luminance and luminance uniformity, flat fluorescent lamps with various structures have been designed and tests therefor have been carried out.

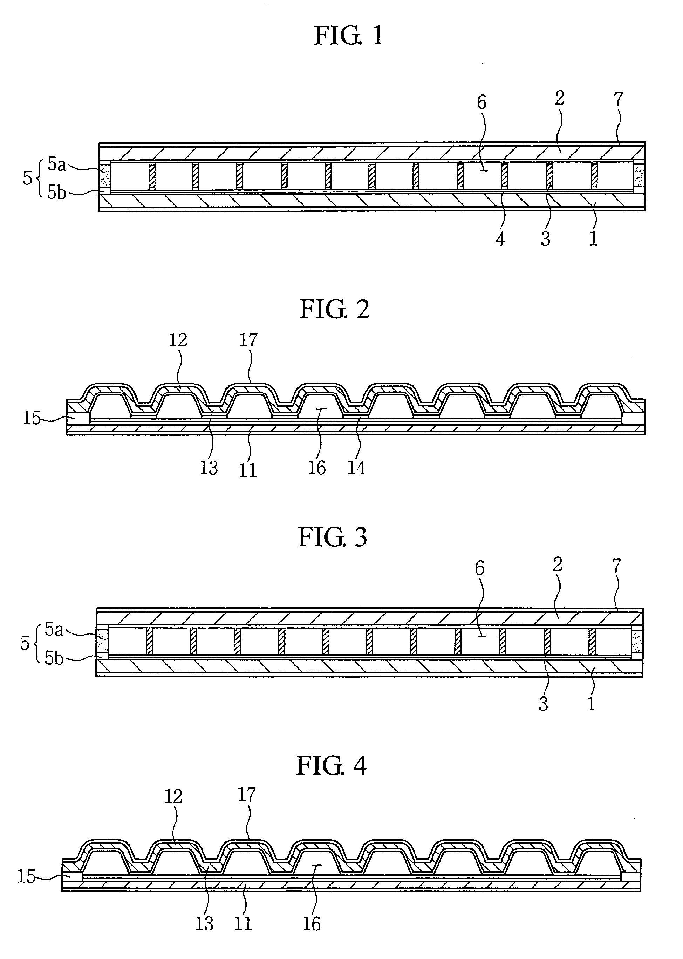

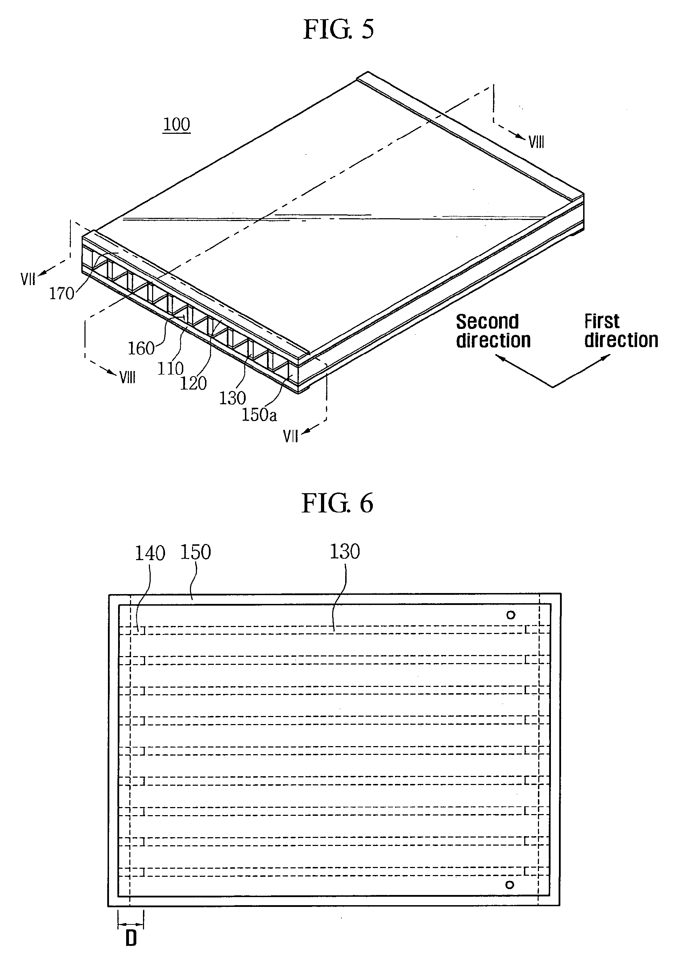

Figs. 1 to 4 illustrate flat fluorescent lamps according to comparative examples to explain advantages of flat fluorescent lamps of figs. 5 to 10 according to preferable embodiments of the present invention. Figs. 1 to 4 illustrate prototype flat fluorescent lamps designed prior to flat fluorescent lamps according to embodiments of the present invention.

Fig. 1 illustrates a flat fluorescent lamp according to the first comparative example. As shown, the flat fluorescent lamp in Fig. 1 is a lamp with barriers provided independently from a panel. The flat fluorescent lamp includes two panels 1, 2 which are disposed apart from each other and face each other.

A plurality of barriers is disposed between the two panels 1, 2. The barriers are arranged parallel to one another at the same spacing. Therefore, the barriers divide a space between the two panels 1, 2 into a plurality of discharge spaces 6 of long rectangular shape. The barriers are bonded to the two panels 1, 2 with the aid of first bonding parts 4.

A second bonding part 5 is formed between peripheries of the two panels 1, 2 to isolate the discharge spaces 6 from the outside. Discharge gas is injected into the isolated discharge spaces 6. The second bonding part 5 includes a sealing member 5a and bonding layers 5b. The sealing member 5a is bonded to the panels 1, 2 with the aid of the bonding layers 5b.

Electrodes 7 for applying discharge voltage to the discharge gas are disposed on both sides of outer surfaces of the panels 1, 2.

The discharge spaces communicate with one another so that the discharge gas can be uniformly injected into the discharge spaces. For example, the barriers are alternatively arranged so that the discharge spaces are arranged in a serpentine structure or communication holes are provided to the barriers, by which a flow route of the discharge gas is provided. When the discharge voltage is applied to the discharge gas from the electrodes 7, barrier discharge is generated in the discharge spaces 6 and visible ray is emitted.

Fig. 2 is a cross-sectional view illustrating a flat fluorescent lamp according to a second comparative example. The flat fluorescent lamp of Fig. 2 includes a panel 11 and a panel 12 on which barriers are integrally formed. The barriers 13 are bonded to the panel 11 with the aid of a first bonding part 14 and form a plurality of discharge spaces 16. Peripheries of the two panels are bonded with a second bonding part 15. The second bonding parts 15 can be made of an aluminum oxide or frit.

In the flat fluorescent lamps of Figs. 1 and 2, in order to bond the barriers 3, 13 to the panels, the first bonding parts 4 have to be applied to whole upper and lower surfaces of the barriers 3, 13. Therefore, steps of applying the first bonding parts 4 to the whole upper and lower surfaces of the barriers 3, 13 are inevitably required and manufacturing cost increases.

### 3^{rd} and 4^{th} comparative examples

To solve the above problems, flat fluorescent lamps in which steps of applying first bonding parts to barriers are limited are illustrated in Figs. 3 and 4.

Fig. 3 illustrates a flat fluorescent lamp according to a third comparative example in which bonding layers 5b are formed on an upper surface and a lower surface of a sealing member 5a but the first boding parts 4 are not formed on the barriers. Therefore, the sealing member 5a is bonded to panels 1, 2 with the aid of the bonding layers 5b, whereas barriers are simply contacted with the panels 1, 2.

Referring to Fig. 4, a second bonding part 15 is formed between two panels 1, 2 along peripheries of the two panels 1, 2. However, barriers 13 are simply contacted directly with the panels 1, 2.

In the flat fluorescent lamps of Figs. 3 and 4, although the barriers 3, 13 are not bonded to the panels, they are closely contacted with the panels by a vacuum suction in an exhausting and sealing process. Accordingly, it is possible to form discharge spaces isolated from one another.

Because the flat fluorescent lamps of Figs. 3 and 4 do not have the first bonding parts 4, 14, it is possible to reduce manufacturing cost and simplify manufacturing process.

However, the flat fluorescent lamps of Figs. 3 and 4 have a problem that their luminance uniformity is bad.

In order to increase luminance uniformity of the flat fluorescent lamps, a matter of the highest priority is to prevent channeling. Channeling is that electricity in a discharge space in a high voltage state flows toward a discharge space in a low voltage state when potential difference occurs between neighboring discharge spaces. The channeling is a main factor to decrease luminance uniformity of the flat fluorescent lamps.

From this point of view, there is a high possibility that a gap between the barriers 3, 13 and the panels are created in the lamps of Figs. 3 and 4, because the barriers 3, 13 are simply contacted with the panels. Channeling occurs seriously through the gap. The gap is created mainly at both ends of the barriers corresponding to both ends of the discharge spaces.

In addition, to drive a display device such as an LCD television using a flat fluorescent lamp, regulating brightness of the flat fluorescent lamp is required. Regulating brightness can be achieved by regulating current applied to the flat fluorescent lamp. Therefore, the flat fluorescent lamp has to be able to show a normal lighting performance on the lamp surface, although low current is input to the lamp.

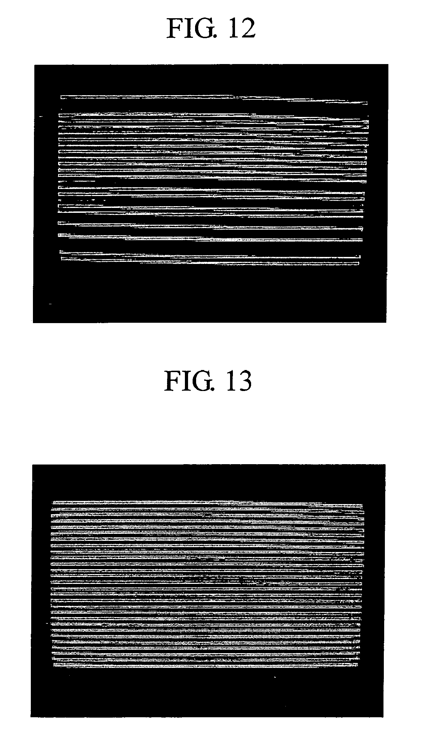

From this point of view, the flat fluorescent lamps of Figs. 3 and 4 have a problem that luminance uniformity decreases remarkably under a low current input and low temperature condition. This problem will be explained with reference to Fig. 12.

### 1^{st} Embodiment

As stated above, the flat fluorescent lamps of Figs. 1 and 2 have a problem that product competitiveness is not good in the viewpoint of manufacturing cost and manufacturing process. On the other hand, the flat fluorescent lamps of Figs. 3 and 4 have a problem that luminance uniformity is seriously bad although it is possible to reduce manufacturing cost and simplify manufacturing process.

Therefore, the present invention aims to solve the above two problems, that is, to reduce manufacturing cost and simplify manufacturing process and at the same time, not to cause decrease in luminance uniformity.

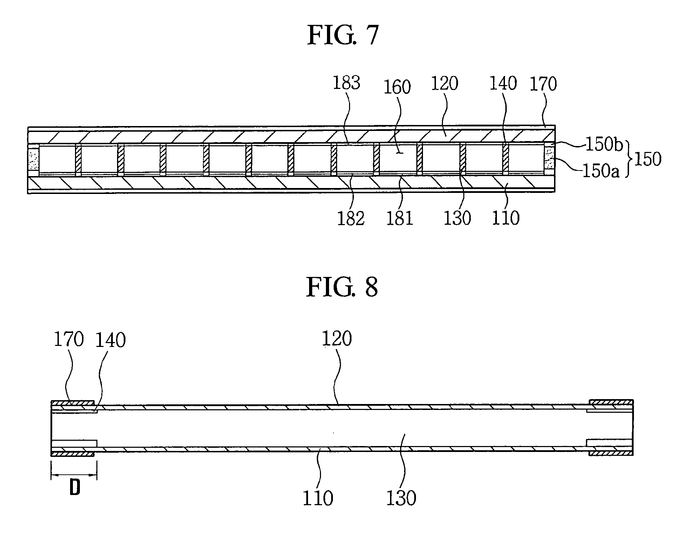

Fig. 5 is a perspective view illustrating a flat fluorescent lamp according to a first embodiment of the present invention, Fig. 6 is a plan view illustrating arrangement of bonding parts in the flat fluorescent lamp of fig. 5, Fig. 7 is a cross-sectional view taken along a line VII-VII of Fig. 5, and Fig. 8 is a cross-sectional view taken along a line VIII-VIII of Fig. 5.

Referring to Figs. 5 to 8, the flat fluorescent lamp according to the first embodiment has barriers provided independently from a panel. The flat fluorescent lamp includes panels 110, 120, barriers 130, first bonding parts 140, a second bonding part 150, and electrodes 170.

A panel 120 is disposed above a panel 110. The panels 110, 120 have a rectangular plate shape. The panels 110, 120 can be made of glass which transmits visible ray and block ultraviolet ray.

The first bonding parts 140 are partially formed on the barriers 130 to bond the barriers 130 partially to the panels 110, 120.

The second bonding part 150 is wholly formed between the two panels 110, 120 along peripheries of the two panels 110, 120 to form an inner space isolated from the outside. The second bonding part 150 includes a sealing member 150a and a bonding layer 150b. The sealing member 150a is disposed between the two panels 110, 120 along the whole peripheries of the two panels 110, 120. The bonding layers 150b are formed between the sealing member 150a and the panels 110, 120 to wholly bond the sealing member 150a to the panels 110, 120.

The barriers 130 are formed along a first direction in the inner space between the panels 110, 120 and the sealing member 150a to divide the inner space into a plurality of discharge spaces 160 with a rectangular cross section. The barriers 130 can be arranged in a serpentine structure or the barriers are provided with communication holes (not shown) so that discharge gas can be uniformly injected into each discharge space 130. Each of a mercury gas, an argon gas, a neon gas, a xenon gas, etc. can be used as the discharge gas. Their mixture can also be used.

The electrodes 170 are disposed on both sides of outer surfaces of the panels 1, 2 along a second direction substantially perpendicular to the first direction. The electrodes 170 apply discharge voltage to the discharge gas. The electrodes 170 can be made of a material with good conductivity, for example, Cu, Ni, Ag, Au, Al, Cr, etc. The electrodes 170 can be formed by attaching a conductive tape or coating metallic powder on outer surfaces of the panels.

The first bonding parts 140 and the bonding layers 150b can be made of glass such as frit or ceramic such as an aluminum oxide. To prevent the first bonding parts 140 and the bonding layers 150b from creating a dark zone, they are preferably made of white or gray color materials.

The bonding layers 150b are wholly formed on upper and lower surfaces of the sealing member 150a which contact with the panels 110, 120, respectively. Therefore, the whole upper and lower surfaces of the sealing member 150a are bonded to the panels 110, 120 with the aid of the bonding layers 150b, by which the inner space is isolated from the outside.

The first bonding parts 140 are partially formed on upper and lower surfaces of the barriers 130 which contact with the panels 110, 120, respectively. Especially, the first bonding parts 140 have length of D from both ends of the barriers 130 which are surrounded by the electrodes 170. The length of the first bonding parts 140, D is preferably about 3 ~ 5cm. Therefore, both ends of the upper and lower surfaces of the barriers 130 are bonded to the panels 110, 120 with the aid of the first bonding parts 140. However, because the first bonding parts are not formed between middle areas of upper and lower surfaces of the barriers 130 and the panels 110, 120, the middle areas of the upper and lower surfaces of the barriers 130 are not bonded to the panels 110, 120 and are simply contacted with the panels 110, 120.

Because both ends of the barriers 130 are bonded to the panels 110, 120 with the aid of the first bonding parts 140, a gap does not create between both ends of the barriers 130 and the panels 110, 120. Therefore, it is possible to prevent channeling from occurring between neighboring discharge spaces through a gap between the barriers 130 and the panels 110, 120.

A reflective layer 181 is formed on an upper surface of the panel 110. The reflective layer 181 reflects rays generated in the discharge spaces 160 toward the panel 120. The reflective layer 181 is made of TiO₂ or Al₂O₃ and can be formed by a chemical vapor deposition method, a spray coating method or a sputtering method. A first fluorescent layer 182 is formed on the reflective layer 181. A second fluorescent layer 183 is formed on a lower surface of the panel 120.

Here, the first bonding parts 140 can be formed by two methods as stated below.

In the first method, the reflective layer 181, the first fluorescent layer 182 and the second fluorescent layer 183 are formed only on exposed areas of the panels 110, 120 which are exposed to the discharge spaces. That is, they are not formed between the panels 110, 120 and the barriers 130 and instead the first bonding parts 140 are formed between the panels and the barriers. More concretely, the reflective layer 181 is formed on the exposed area of the upper surface of the panel 110 which is exposed to the discharge space 160. The first fluorescent layer 182 is formed on the reflective layer 181. The second fluorescent layer 183 is formed on the exposed area of the lower surface of the panel 120 which is exposed to the discharge spaces 160.

In the second method, the reflective layer 181, the first fluorescent layer 182, and the second fluorescent layer 183 are applied to whole inner surfaces of the panels 110, 120 and thereafter a bonding agent such as a frit having penetrability are provided between the barriers 130 and the panels 110, 120. Then, the bonding agent forming the first bonding parts 140 penetrate into the first and second fluorescent layers 182, 183 and thus parts of the first and second fluorescent layers 182, 183 between the barriers 130 and the panels 110, 120 have strong adhesiveness. Accordingly, both ends of the barriers 130 can be bonded to the panels 110, 120 with the aid of the first and second fluorescent layers into which the bonding agent penetrate.

### 2^{nd} Embodiment

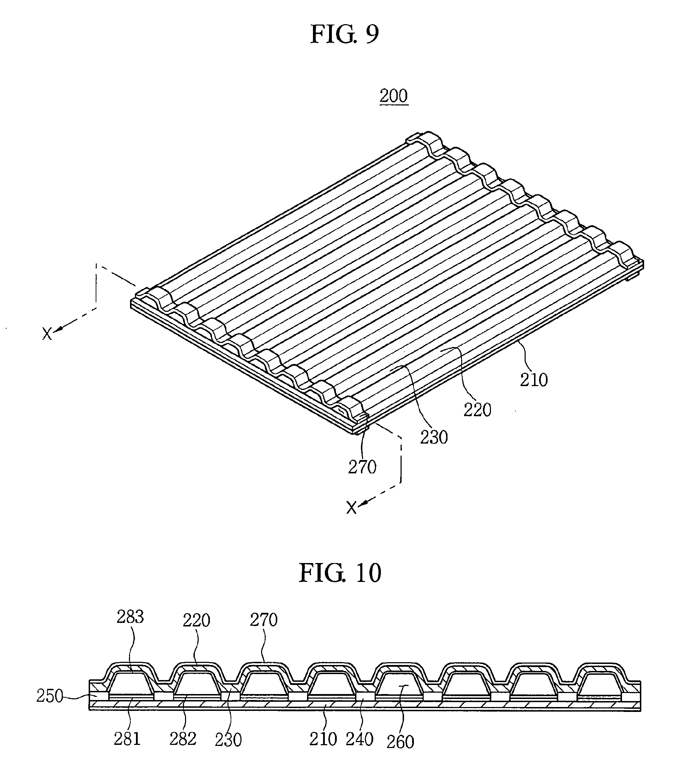

Fig. 9 is a perspective view illustrating a flat fluorescent lamp according to a second embodiment of the present invention and Fig. 10 is a cross-sectional view taken along a line X-X of Fig. 9.

Referring to Figs. 9 and 10, a flat fluorescent lamp according to the second embodiment includes a panel 210, a panel 220 on which barriers 230 are integrally formed, first bonding parts 240, a second bonding part 250 and electrodes 270.

The panel 210 is disposed above the panel 220. The barriers 230 of the panel 220 formed along a first direction are contacted with the panel 210 to form a plurality of discharge spaces 160 with a cross-section of arch shape. The barriers 230 have width of 1 ~ 5mm. The electrodes 270 are formed on both sides of outer surfaces of the panels 210, 220 along a second direction substantially perpendicular to the first direction.

The first bonding parts 240 bond the barriers partially to the panels 210. The first bonding parts 240 are partially formed on both ends of lower surface of the barriers 230. The first bonding parts 240 have length of D from both ends of the barriers 230 which are surrounded by the electrodes 270. The length of the first bonding parts 240, D is preferably about 3 - 5cm.

The second bonding part 250 is wholly formed along peripheries of the panels and thus, forms an inner space isolated from the outside. Therefore, the whole peripheries of the two panels are bonded to each other with the aid of the second bonding part 250.

The second bonding parts 250 can be made of glass such as frit or ceramic such as an aluminum oxide.

A reflective layer 281 is formed on an upper surface of the panel 210. A first fluorescent layer 282 is formed on the reflective layer 281. A second fluorescent layer 283 is formed on a lower surface of the panel 220.

The first bonding parts 240 can be formed by the two methods as stated above.

### 3^{rd} Embodiment

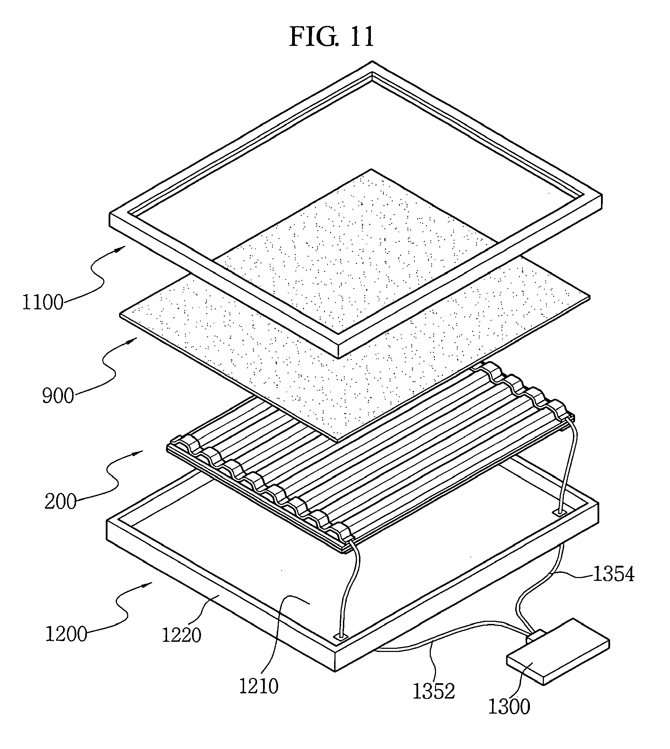

Fig. 11 an exploded perspective view illustrating a backlight unit according to a third embodiment of the present invention.

Referring to Fig. 11, the backlight unit according to the third embodiment includes the flat fluorescent lamp of Fig. 9, an upper case and a lower case 1100, 1200, an optical sheet 900, an inverter 1300.

One of the lamps aforementioned in the above embodiments may be used as a light source for the backlight unit. In this embodiment, the lamp according to the second embodiment is selected for the illustrative purpose.

The lower case 1200 comprises a bottom 1210 and an edge wall 1220 elongated from a periphery of the bottom 1210 for receiving the lamp 200. The lamp 200 is received in the lower case 1200.

The inverter 1300 generating discharge voltage for operating the lamp 200 is disposed under the lower case 1200. Discharge voltages generated from the inverter 1300 are transmitted via a first line 1352 and a second line 1354 to the electrodes 270 of the lamp 200.

The optical sheet 900 may include a diffusion sheet (not shown) for diffusing light emitted from the flat fluorescent lamp 200 and a prism sheet (not shown) for collimating the diffused light.

The upper case 1100 and the lower case 1200 are coupled with each other to fix the flat fluorescent lamp 200 and the optical sheet 900. Also, the upper case 1100 prevents the lamp 200 from being separated from the lower case 1200.

An LCD panel (not shown) may be disposed above the upper case 1100.

### Lighting test under low current and low temperature

Lighting tests for the lamp of Fig. 4 according to the fourth comparative example and the lamp of Fig. 9 according to the second embodiment of the present invention are carried out. Both of the lamps are equally provided with low current of 1.348A and they are put under low temperature of -20°C for 24 hours.

Fig. 12 is a picture showing a result of a lighting test for the flat fluorescent lamp of fig. 4 according to the fourth comparative example. Fig. 13 is a picture showing a result of a lighting test for the flat fluorescent lamp of Fig. 9 according to the second embodiment of the present invention.

As shown in Fig. 12, some of the discharge spaces of the lamp of Fig. 4 do not light in such a low current and temperature condition. This indirectly proves that a gap between both ends of the barriers 13 and the panel 14 is created and channeling occurs through the gap.

On the contrary, as shown in Fig. 12, all of the discharge spaces of the lamp of Fig. 9 light in the same condition. This means that in the present invention, both ends of the barriers and the panel are bonded with each other with the aid of the first bonding parts, a gap between both ends of the barriers and the panel is not created, and as a result channeling can be prevented.

As stated above, the present invention can acquire two conflicting advantages at the same time. That is, the present invention can simplify manufacturing process and reduce manufacturing cost and at the same time, does not cause the decrease in luminance uniformity.

A gap between both ends of the barriers and the panel is not created, by which channeling between the discharge spaces can be prevented. As a result, all of the discharge spaces can light under low current and low temperature, by which luminance uniformity of the flat fluorescent lamp is improved.

The present invention has been described above with reference to the aforementioned embodiments. It is evident, however, that many alternative modifications and variations will be apparent to those skilled in the art in light of the foregoing description. Accordingly, the present invention embraces all such alternative modifications and variations as fall within the spirit and scope of the appended claims.

## Claims

1. A flat fluorescent lamp comprising:
two panels disposed at an upper position and a lower position respectively;
barriers forming discharge spaces which are provided with discharge gas;
first bonding parts partially formed on the barriers to bond the barriers partially to the panel;
a second bonding part wholly formed between the two panels along peripheries of the two panels to wholly bond the peripheries of the two panels; and
electrodes for applying discharge voltage to the discharge gas.

2. The flat fluorescent lamp of claim 1, wherein the first bonding parts are formed on both ends of the barriers.

3. The flat fluorescent lamp of claim 2, wherein the first bonding parts have length of 3 - 5cm.

4. The flat fluorescent lamp of claim 1, wherein the first bonding parts and the second bonding part are made of glass or ceramic.

5. The flat fluorescent lamp of one of claims 1 to 4, wherein the second bonding part includes a sealing member and bonding layers,
the sealing member is disposed between the two panels along the whole peripheries of the two panels, and
the bonding layers are formed between the panels and the sealing member to wholly bond the sealing member to the panels.

6. The flat fluorescent lamp of one of claims 1 to 4, wherein the barriers are integrally formed on at least one panel of the two panels.

7. The flat fluorescent lamp of one of claims 1 to 4, further comprising:
a reflective layer formed on an exposed area of an upper surface of the panel disposed at the lower position which is exposed to the discharge spaces;
a first fluorescent layer formed on the reflective layer;
a second fluorescent layer formed an exposed area of a lower surface of the panel disposed at the upper position which is exposed to the discharge spaces.

8. A backlight unit comprising:
a flat fluorescent lamp including two panels disposed at an upper position and a lower position respectively,
barriers forming discharge spaces which are provided with discharge gas,
first bonding parts partially formed on the barriers to bond the barriers partially to the panel,
a second bonding part wholly formed between the two panels along peripheries of the two panels to wholly bond the peripheries of the two panels, and
electrodes for applying discharge voltage to the discharge gas;
an upper case and a lower case receiving the flat fluorescent lamp;
an optical sheet disposed between the upper case and the flat fluorescent lamp; and
an inverter applying the discharge voltage to the electrodes to drive the flat fluorescent lamp.
